# EUROPEAN PATENT APPLICATION

(11) **EP 2 053 782 A1**
(43) Date of publication of application: **29.04.2009**
(21) Application number: 07785134.3
(22) Date of filing: 18.07.2007
(51) Int. Cl.: H04L 12/24, H04L 29/06

(54) **A COMMUNICATION NETWORK SYSTEM AND METHOD FOR PROVIDING A SERVICE BROKER FUNCTION AND A SERVICE BROKER DEVICE**

(30) Priority: 21.08.2006 CN 200610115103; 13.02.2007 CN 200710080206
(71) Applicant: Huawei Technologies Co., Ltd., Longgang District, Shenzhen Guangdong 518129 (CN)
(72) Inventor: SHI, Youzhu, Shenzhen, Guangdong 518129 (CN)
(74) Representative: Gulde, Klaus W.
(86) International application number: PCT/CN2007/002192
(87) International publication number: WO 2008/025211

(57) **Abstract**

A communication network system and a method for providing a service broker function, and a service broker apparatus are disclosed. The system includes: a user subscription data server coupled to a service broker entity, configured to save user subscription data; a service control entity coupled to the service broker entity, configured to provide a service for the user; a session control entity coupled to the service broker entity, configured to provide a session control and registration service; and the service broker entity, having at least one of the following functions: controlling a current communication to be triggered to a specific service control entity, providing an interaction management capability for a plurality of services, providing a capability that combines a plurality of services into a new blended service, providing a dialogue management capability, providing a user management capability, providing an intercepting capability, providing a charging capability, and providing a uniform management capability for IMS application services and non-IMS application services.

## Description

### FIELD OF THE INVENTION

The present invention relates to the field of communications, and in particular, to a communication network system and a method providing a service broker function, and a service broker apparatus.

### BACKGROUND

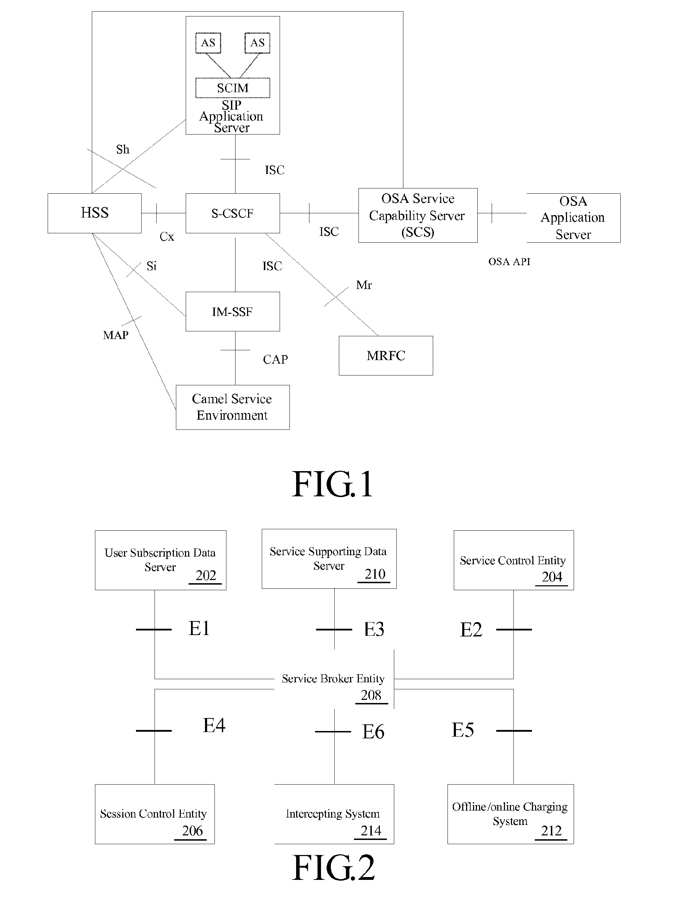

Internet Protocol (IP) Multimedia Subsystem (IMS) is introduced in the 3rd Generation Partnership Project (3GPP) Release 5. The IMS is a system based on Session Initiation Protocol (SIP), in which the session layer and the service layer are separated. The IMS system service architecture defined in 3GPP Technical Specification (3GPP TS) 23.218 is shown in FIG. 1.

Application servers in FIG. 1 are categorized into three types, i.e., SIP application server, Open Service Access (OSA) application server, and IP Multimedia System-Service Switching Function (IM-SSF). The SIP application server is configured to implement a value-added application based on SIP. The OSA application server is configured to implement a third party application based on OSA Application Programming Interface (API). The OSA application server needs to interact with an IMS core network via an OSA Service Capability Server (SCS). The IM-SSF is configured to support provision of Customized Applications for Mobile Network Enhanced Logic (CAMEL) service capability within an IMS domain. Also, there is another type of special SIP application server known as Service Capability Interaction Manager (SCIM) in 3GPP service system, which is configured to manage service interactions between application servers. No specific details about SCIM, however, are provided in 3GPP.

The service and the session are separated in the IMS system, and there is an open interface such as OSA in the IMS system, which facilitates service development by a third party. More and more services will become available for network users in the future, and accordingly service conflicts will also become more and more prominent. Meanwhile, operators wish to be able to integrate existing services and to provide new blended services. These characteristics create new requirements for service provisioning methods, in the context of which Service Broker technologies are proposed. During the research of the present invention, the inventor has found that the 3GPP standard currently fails to provide a complete architecture and implementation for IMS Service Broker. In another standard organization, i.e., the MultiService Forum (MSF), although the concept and architecture of service broker are introduced, the primary focus still remains on aspects such as the interface between a service broker and an application server or a Home Subscriber Server (HSS). However, key technologies for the service broker, such as registration and session routing after the introduction of the service broker, dialogue management of the service broker, user management of the service broker, support for charging function by the service broker, support for intercepting function by the service broker, uniform management for IMS application services and non-IMS application services invoked at the service broker, etc., are yet to be investigated, which practically makes the MSF Service Broker commercially unavailable.

### SUMMARY

The present invention provides a communication network system and a communication method for providing service broker functions, and a service broker apparatus, to implement key technologies including registration and session routing after the introduction of the service broker, dialogue management of the service broker, user management of the service broker, support for charging function by the service broker, support for intercepting function by the service broker, uniform management for IMS application services and non-IMS application services invoked at the service broker, etc., so that the service broker can be commercially deployed.

The communication network system according to an embodiment of the present invention includes:
a user subscription data server coupled to a service broker entity to save user subscription data;
a service control entity coupled to the service broker entity to provide services for a user;
a session control entity coupled to the service broker entity to provide session control and registration services; and
a service broker entity having at least one of the following functions:
   controlling a current communication to be triggered to a specific service control entity;
   providing an interaction management capability for a plurality of services;
   providing a capability that combines a plurality of services into a new blended service;
   providing a dialogue management capability;
   providing a user management capability;
   providing an intercepting capability;
   providing a charging capability; and
   providing a uniform management capability for IMS application services and non-IMS application services.

In accordance with the communication method for providing a service broker function according to an embodiment of the present invention, a service broker entity that provides a service broker function performs service triggering. After receiving the message from a session control entity or the service control entity, the service broker entity triggers a message carrying user subscription data and/or user service supporting data to a service control entity according to the user subscription data and/or the user service supporting data of the user corresponding to the message via at least one of the following protocol interfaces: an SIP interface, an Intelligent Network Application Protocol interface, a CAMEL Application Part protocol interface, a Mobile Application Part protocol interface, an Open Service Access application programming interface, and an internal interface.

The service broker apparatus according to an embodiment of the present invention includes:
a trigger processing module, configured to provide a service triggering process and/or service interaction management function for IMS application services and non-IMS application services according to user subscription data and/or service supporting data;
a call session management module, configured to provide a call session control function;
a user management module, configured to provide user data management function; and
a protocol interface module, configured to provide underlying protocol process interfacing with another entity.

In an embodiment of the present invention, service triggering is performed by a service broker entity. Upon receiving a message from a session control entity or a service control entity, the service broker entity triggers the message to the service control entity according to user subscription data and/or user service supporting data of a user corresponding to the message. Using solutions provided in an embodiment of the present invention, key technologies such as registration and session routing after the introduction of the service broker entity, dialogue management and user management of the service broker entity, support for charging/intercepting function by the service broker entity, service interaction management between IMS application services and non-IMS application services invoked at the service broker entity, etc., can be implemented, so that the service broker entity can be commercially deployed.

### BRIEF DESCRIPTION OF THE DRAWINGS

The embodiments of the present invention will be illustrated with the accompanying drawings incorporated into and as a part of the description, in conjunction with the above general descriptions and the following detailed embodiments for illustrating, rather than limiting in any way the scope of the present invention, in which:

FIG. 1 is a diagram of service architecture of an IMS system according to the prior art;

FIG. 2 is a block diagram of a communication network system with the introduction of a service broker entity according to an embodiment of the present invention;

FIG. 3 is a block diagram of a service broker apparatus according to an embodiment of the present invention;

FIG. 4 is a flowchart for triggering IP multimedia service and conventional intelligent service according to an embodiment of the present invention;

FIG. 5 is a flowchart of a first embodiment of assisting service trigger control by service supporting data;

FIG. 6 is a flowchart of a second embodiment of assisting service trigger control by service supporting data; and

FIG. 7 is a flowchart of a third embodiment of assisting service trigger control by service supporting data.

### DETAILED DESCRIPTION

The embodiments of the present invention provide a communication network system that implements key technologies such as registration and session routing after the introduction of the service broker, dialogue management of the service broker, user management of the service broker, support for charging function by the service broker, support for intercepting function by the service broker, uniform management for IMS application services and non-IMS application services invoked at the service broker, etc., so that the service broker can be commercially deployed.

FIG. 2 illustrates a logical network functional architecture related to service broker in an embodiment of the present invention. The communication network system according to the embodiment of the present invention includes: a user subscription data server 202 coupled to a service broker entity to save user subscription data; a service control entity 204 coupled to the service broker entity to provide services for a user; a session control entity 206 coupled to the service broker entity to provide session control and registration services; and a service broker entity 208 having at least one of the following functions: controlling a current communication to be triggered to a specific service control entity 204, providing an interaction management capability for a plurality of services, providing a capability that combines a plurality of services into a new blended service, providing a dialogue management capability, providing a user management capability, providing an intercepting capability, providing a charging capability, and providing a uniform management capability for IMS application services and non-IMS application services.

The communication network system according to an embodiment of the present invention may further include: a service supporting data server 210 coupled to the service broker entity 208 to obtain various service supporting data of a user to assist service trigger control.

The communication network system according to an embodiment of the present invention may further include: an offline/online charging system 212 coupled to the service broker entity 208 to provide a charging information collection and/or online charging capability.

The communication network system according to an embodiment of the present invention may further include: an intercepting system 214 coupled to the service broker entity 208 to provide a lawful intercepting control command issuing and intercepting information collection capability.

The user subscription data server 202 is a data server for a home subscriber server and/or a non-home subscriber server. The user subscription data includes at least one of the following: quality of service subscription data of a user (e.g., quality of service profile (QoS profile)), IMS service triggering criterion data (i.e., triggering filter criteria for an IMS application server, e.g., Initial Filter Criteria (iFC)), intelligent service triggering criterion data (data for controlling intelligent service triggering, such as CAMEL Subscription Information (CSI), Trigger Detect Point (TDP) data, Trigger Address List data), service interaction management data (i.e., compatibility management data for different services, e.g., indicating whether a service invocation is allowed after another one has been invoked), charging address data (e.g., the address of Charging Collection Function (CCF), and the address of Online Charging System (OCS)), and service broker capability selection information data (including a service broker address, and further including a selection criterion for service brokers if there is a plurality of service brokers). The user subscription data is stored in user subscription data servers 202 which are located at one physical network element entity, or in user subscription data servers 202 which are located at different physical network element entities.

The service control entity 204 is a functional entity which provides a service. A service control entity 204 may provide one or more services. The service control entity 204 may be an IMS Application Server (AS) (e.g., SIP AS, OSA SCS, and IM-SSF), an intelligent network Service Control Function (SCF), an OSA Application Server, a soft switch, etc.

The service supporting data server 210 is configured to obtain various service supporting data for a user. The service broker entity 208 or the service supporting data server 210 may use the data to assist service trigger control. The data includes at least one of the following: presence information data of a user, geographical location information data of a user, terminal capability data of a user, preference setting data of a user, and user state data. The user state data includes at least one of the following: user call state, which is the current state of a user during a call, e.g., call attempt, answer, no answer, etc., and may also be referred to as detect point (DP) in intelligent services; user registration state, e.g., message originator registered, message originator unregistered, message terminator registered, message terminator unregistered, etc.; user busy state, e.g., Network Determined User Busy, Approaching Network Determined User Busy, etc.; the execution state of the invoked service of a user, e.g., success, failure, etc., and in this case the invoked service may be a specific service, a service invoked by a specific service control entity 204, or the like; the state of the service data setting of a user; and the like. All types of the above-mentioned service supporting data may be located at one physical network element entity, or may be located at different physical network element entities, e.g., a home subscriber server, service broker entity 208, a service control entity 204, a certain service supporting data (e.g., presence information data) server, etc.

The session control entity 206 provides functions such as session control, registration service, etc. The session control entity 206 may be a soft switch or a Serving-Call Session Control Function (S-CSCF) entity.

The service broker entity 208 provides an interaction capability with the service control entity 204. The service broker entity 208 is sometimes referred to as SCIM. The service broker may provide at least one of following functions: the service broker determines whether the current communication should be triggered to a specific service control entity 204 according to subscription data and/or service supporting data of a user; the service broker provides the interaction management capability for a plurality of services; the service broker provides a blended service combined by a plurality of services from a plurality of service control entities 204; the service broker provides a dialogue management function; the service broker provides a user management function; the service broker entity 208 submits charging information to the offline/online charging system 212 and performs the online charging function under the online charging system's control; the service broker submits intercepting information for the intercepted user to the intercepting system 214; the service broker submits Detect Point (DP) events to SCF and may perform Service Switching Function (SSF) under the SCF's control; and the service broker entity 208 provides uniform management for IMS application services and non-IMS application services (e.g., intelligent services) invoked thereon. The service broker entity 208 and the session control entity 206 may be located at the same physical network element entity or at different physical network element entities.

The offline/online charging system 212 provides charging information collection and online charging functions, including Charging Collection Function, Event Charging Function, Session Charging Function, etc., defined by 3GPP.

The intercepting system 214 provides functions of issuing lawful intercepting control instructions and intercepting information collection, including Administration Function, Delivery Function, etc., defined by 3GPP.

Here, the interface E1 between the service broker entity 208 and the user subscription data server 202 is a direct interface or an indirect interface. The interface may employ (but is not limited to) at least one of the following protocols: SIP, Diameter Protocol, Generic User Profile (GUP) protocol, Hyper Text Transport Protocol (HTTP), Mobile Application Part (MAP) protocol, and an internal interface protocol. The service broker may obtain user subscription data from the user subscription data server 202 via the interface E1. Between the service broker entity 208 and the user subscription data server 202, there may exist another intermediate network element, e.g., a Generic User Profile (GUP) server, i.e., the interface E1 may be a direct interface or an indirect interface.

Here, the interface E2 between the service broker entity 208 and the service control entity 204 may employ (but is not limited to) at least one of the following protocols: SIP, Intelligent Network Application Protocol (INAP), CAMEL Application Part (CAP) protocol, MAP protocol, OSA application programming interface (API), and an internal interface protocol. The interface between the service broker entity 208 and the service control entity 204 may also be an internal interface, e.g., when the service broker entity 208 simultaneously has a part of service providing functions.

Here, the interface E3 between the service broker entity 208 and the service supporting data server 210 may employ (but is not limited to) at least one of the following protocols: SIP, Diameter Protocol, Generic User Profile (GUP) protocol, Hyper Text Transport Protocol (HTTP), Mobile Application Part (MAP) protocol, and an internal interface protocol. When the service supporting data server function and service broker function for a part of types of service supporting is provided together, the interface may be an internal interface.

Here, the service broker entity 208 and the session control entity 206 may be a same physical network element entity or different physical network element entity. The interface E4 between the service broker entity 208 and the session control entity 206 may employ (but is not limited to) at least one of the following protocols: SIP, Intelligent Network Application Protocol, CAMEL Application Part protocol, MAP protocol, and an internal interface protocol. When the session control entity 206 and the service broker entity 208 are provided together, the interface may be an internal interface.

Here, the interface E5 between the service broker entity 208 and the offline/online charging system 212 may employ at least one of the following protocols: SIP, Diameter Protocol, Intelligent Network Application Protocol, CAMEL Application Part (CAP) protocol, and Mobile Application Part (MAP) protocol.

Here, the interface E6 between the service broker entity 208 and the intercepting system 214 may employ at least one of following protocols: Transmission Control Protocol (TCP), X.25 protocol, and SIP. The interface is configured to transfer communications of the intercepted object and to intercept related events.

Here, the session control entity 206 may be at least (but is not limited to) a serving call session control function entity or a soft switch entity. A serving call session control function entity routes a received message to the service broker entity 208 in at least one of the following manners: to route the received session message to the service broker entity 208 according the initial filter criteria including a routing address of the service broker entity 208; and to route the received message directly to the service broker entity 208. Here, because the message is not matched by a filter criterion while being directly routed, the serving call session control function entity may obtain the routing address of the service broker entity 208 according to preset data or from the message.

Here, the service broker entity 208 may obtain the routing address of the serving call session control function entity in one of (but not limited to) the following manners that: the service broker entity 208 obtains the routing address of the serving call session control function entity from the message sent by the serving call session control function entity; and the service broker entity 208 queries the user subscription data server 202 for the routing address of the serving call session control function entity.

The service broker entity 208 may process the subscription request for user registration state information in one of (but not limited to) the following manners that: the service broker entity 208 receives the subscription request for the user registration state information from other network entities (e.g., a user terminal, an application server, and a Proxy-Call Session Control Function (P-CSCF)); and the service broker entity 208 issues a subscription request for the user registration state information to the serving call session control function entity. Here, the service broker entity 208 may obtain the user registration state information in (but not limited to) the following manners that: the service broker entity 208 obtains the user registration state information from the serving call session control function entity, e.g., via a registration message or a notification message of the above-mentioned subscription message from the serving call session control function entity; and the service broker entity 208 generates user registration state information by itself.

The service broker entity 208 may fork a message according the user routing information, and sends the forked messages to one or more user terminals via the serving call session control function entity. The service broker entity 208 carries an indicator of forking prohibition within the message sent to the serving call session control function entity to notify the serving call session control function entity that no forking is necessary. Alternatively, the service broker entity 208 may fork a message according to the user routing information, and directly route the forked messages to one or more user terminals.

In cases where SIP may be employed between the service broker entity 208 and the service control entity 204, the service broker entity 208 may add a dialogue identifier in a routed message. The dialogue identifier is to associate messages between the service broker entity 208 and the service control entity 204. In cases where Intelligent Network Application Protocol, CAMEL Application Part protocol, or Mobile Application Part protocol may be employed between the service broker entity 208 and the service control entity 204, the service broker entity 208 performs dialogue association with the service control function entity through Transaction Capabilities Application Part protocol dialogue identifiers at its own side.

The user data managed by the service broker entity 208 includes (but is not limited to) one of the following data: user service subscription data, user service supporting data, user routing information, etc. The sources of these data may be (but is not limited to) messages from the user subscription data server 202, the service supporting data server 210, or the session control entity 206. Here, the service broker entity 208 requests for downloading user subscription data from the user subscription data server 202 after the service broker entity 208 receives a user registration message from the serving call session control function entity, a session request message from/to an unregistered user, etc. The service broker entity 208 may request for downloading user service supporting data from the service supporting data server 210 after the service broker entity 208 receives a user registration message, a session request message, or the like from the serving call session control function entity. The service broker entity 208 may also route the user registration message, the session request message, or the like, to the service supporting data server 210, which carries user service supporting data within the returned response message for the request. The service broker entity 208 may also record related routing information of the corresponding user terminal for routing and addressing for the user. The related routing information includes at least one of (but not limited to) the following information: the address of the access network element of a user access network (e.g., P-CSCF), the contact address of a user terminal, the Globally Routable User Agent Uniform Resource Identifier of a user terminal, the terminal capability of a user, the user state data, and the preference setting information of a user.

The service broker entity 208 may determine the busy state of the user state data in (but not limited to) the following manners that: the service broker entity 208 determines user determined busy state by the SIP message from the user; the service broker entity 208 determines the user busy state according to user resource constraint information and occupation information of the current session resource of the user obtained from the user subscription data server 202; and the service broker entity obtains network determined user busy and/or approaching network determined busy state from the network determined user busy server.

The service broker entity 208 may submit charging information to the offline/online charging system 212. The service broker entity 208 may perform online charging under the online charging system's control.

In cases where the SIP message received at the service broker entity 208 does not include the address of the charging system, the service broker entity 208 may obtain the address of the charging system from the user subscription data server 202, and append the address of the charging system to the SIP message to be sent. In cases where the SIP message received at the service broker entity 208 does not include an IMS charging identifier, the service broker entity may generate an IMS charging identifier, and append it to the SIP message to be sent.

In cases where the service broker entity 208 needs to route a message to a network entity of another operator, the service broker entity 208 may generate an operator identifier, and append it to the message to be sent to the network entity of the other operator.

In cases where the SIP message received at the service broker entity 208 includes an IMS charging identifier, the service broker entity 208 may append an IMS charging identifier entity to all the session related SIP messages to be sent.

The service broker entity 208 may provide a blended service combined by a plurality of services by triggering a plurality of service control entities 204 and generate a blending application charging identifier corresponding to the blended service. Here, different blending application charging identifiers correspond to different blended services. The service broker entity 208 may transfer the blending application charging identifier to the service control entity 204, the session control entity 206, etc. The service broker entity 208 and/or the service control entity 204, the session control entity 206, etc., may transfer the blending application charging identifier to the offline/online charging system 212.

The service broker entity 208 may transfer the blending application charging identifier to the offline/online charging system 212 in at least one of (but not limited to) the following manners: carrying the blending application charging identifier by extending a new attribute value pair in the Diameter Protocol; carrying the blending application charging identifier by adding a parameter in the original attribute value pair of the Diameter Protocol; and carrying the blending application charging identifier by an original parameter or header.

The service broker entity 208 may obtain lawful intercepting data information about an intercepted object from a lawful intercepting management function entity in the intercepting system 214 or another entity which receives the intercepting data. The above-mentioned intercepting system 214 includes a delivery function entity configured to receive intercepting related information sent by the service broker entity 208 according to the intercepting data of the intercepted object. The lawful intercepting data of the above-mentioned intercepted object includes at least one of the following information: an identifier of an intercepted object, a flag indicative of whether one or more parties are being intercepted, a delivery function entity address, an activation indicator of an intercepted object, a query indicator of an intercepted object, and an attribute modification indicator of an intercepted object. The above-mentioned service broker entity 208 may control the communication content of the intercepted object which is transferred to the delivery function entity by the media gateway.

The service broker entity 208 supports uniform triggering and uniform service interaction management for IMS application services and non-IMS application services. The IMS application services and non-IMS application services use uniform service filter criterion. For example, the service broker entity 208 supports triggering IP multimedia services and traditional intelligent services, and the above-mentioned IMS service triggering criterion and the intelligent service triggering criterion data may be uniformed into a kind of service triggering criterion data.

Descriptions are given below to registration and session routing after the introduction of the service broker entity 208, dialogue management and user management of the service broker entity 208, support for charging/intercepting function by the service broker entity 208, uniform management of IMS application services and non-IMS application services, etc., so that the service broker entity 208 may be commercially deployed.

An embodiment of the present invention further provides a service triggering method. In accordance with the communication method for providing the service broker function according to an embodiment of the present invention, the service broker entity 208 that provides the service broker function performs service triggering. Here, the service broker entity 208 receives a message from the session control entity 206 or the service control entity 204, and then, according to user data of the user corresponding to the message, triggers the message carrying the user subscription data and/or user service supporting data to the service control entity 204 via at least one of the following protocol interfaces: an SIP interface, an Intelligent Network Application Protocol interface, a CAMEL Application Part interface, a Mobile Application Part protocol interface, an Open Service Access Application Programming Interface, and an internal interface.

The above-mentioned service control entity 204 includes at least one of the following entities: an IMS application server or an intelligent network service control function entity, an Open Service Access application server, and a soft switch. The above-mentioned service broker entity 208 uniformly supports service interaction management for different services provided by different service control entities 204. The above-mentioned user data includes user subscription data and/or user service supporting data.

The different services provided by different service control entities 204 use uniform service triggering criterion, which describes a triggering criterion for at least one of the following information: any content of the message received by the service broker entity 208 and/or user service supporting data, and the description information of the specified service control entity 204.

Here, the message received by the service broker entity 208 is a message from the session control entity 206 or the service control entity 204, for example an SIP message, etc.

The above-mentioned description information of the service control entity 204 includes at least one of the following information: the description information of the address of the service control entity, and the description information of the service invocation message sent from the service broker entity 208 to the service control entity. The description information of the service invocation message includes at least one of the following information: the protocol type for the message (e.g., SIP, INAP protocol, and the like), the name of the message (e.g., SIP INVITE message and the like), the key parameters of the message (e.g., service key parameter in an INAP InitialDP message, etc.). Furthermore, the description information of the service control entity 204 includes the following information: a different local process that invokes a different type of service and a parameter used by such a local process, and/or a service identifier.

The above-mentioned session control entity 206 routes the received message to the service broker entity 208 in one of the following manners: routing the received message to the service broker entity 208 according to initial filter criteria including the routing address of the service broker entity 208; and routing the received message directly to the service broker entity 208. In direct routing, the session control entity 206 obtains the routing address of the service broker entity 208 according to pre-settings or from the received message.

When the above-mentioned message is a registration message, message routing is performed in at least one of various manners that the session control entity 206 uses a third party registration to route the registration message to the service broker entity 208 according to the initial filter criteria including the routing address of the service broker entity 208; the session control entity 206 directly routes the registration message to the service broker entity 208 after the user is successfully registered; and the session control entity 206 directly routes the registration message to the service broker entity 208 after the session control entity 206 receives a user registration message.

The above-mentioned service broker entity 208 obtains the routing address of the session control entity 206 in at least one of the following manners that: the service broker entity 208 obtains the routing address of the session control entity 206 from the message sent by the session control entity 206; and the service broker entity 208 queries the user subscription data server 202 for the routing address of the session control entity 206.

The above-mentioned service broker entity 208 may process a subscription request for user registration state information in at least one of the following manners that: the service broker entity 208 receives a subscription request for user registration state information from a subscription requester; and the service broker entity 208 issues a subscription request for user registration state information to the session control entity 206.

The above-mentioned service broker entity 208 obtains the subscribed user registration state information in at least one of the following manners that: the service broker entity 208 obtains user registration state information from the session control entity 206; and the service broker entity 208 generates user registration state information.

The above-mentioned service broker entity 208 forks a message according to user routing information, and sends the forked message to one or more user terminals via the session control entity 206. The message sent to the session control entity 206 carries a forking prohibition indicator; or the service broker entity 208 forks the message according to user routing information, and directly routes it to one or more user terminals.

If the SIP message received by the service broker entity 208 does not include the address of the charging system, the service broker entity 208 obtains a charging address from the user subscription data server 202, and appends the charging address to the outgoing SIP message.

If the SIP message received by the service broker entity 208 does not include an IMS charging identifier, the service broker entity 208 generates a charging identifier, and appends the IMS charging identifier to the outgoing SIP message.

In cases where the service broker entity 208 needs to route a message to a network element of another operator, the service broker entity 208 generates an operator identifier, and appends the operator identifier to the message to be sent to the network element of the another operator.

The above-mentioned service broker entity 208 provides a blended service combined by a plurality of services, generates a blending application charging identifier corresponding to the blended service, and sends the blending application charging identifier to the session control entity 206, and/or the service control entity 204, and/or the offline/online charging system 212.

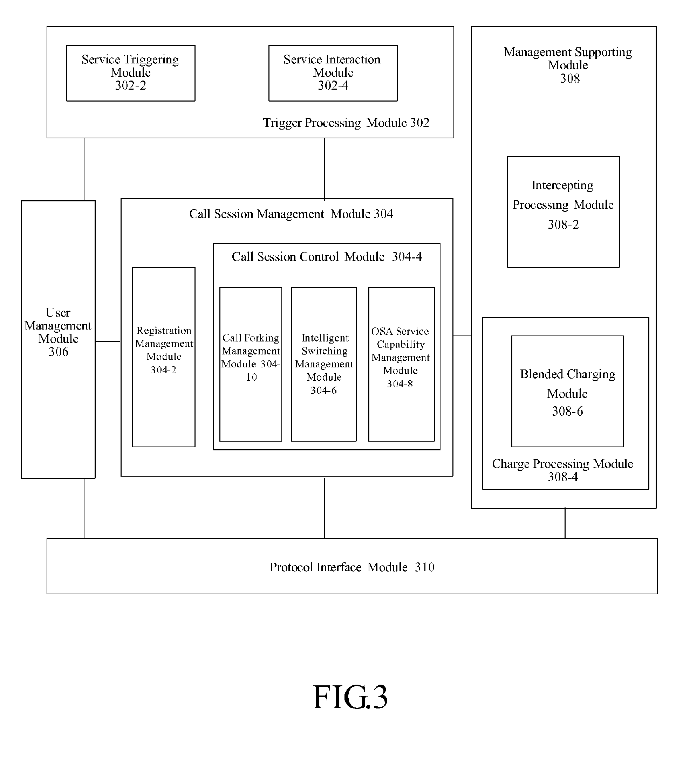

As shown in FIG. 3, a service broker apparatus according to an embodiment of the present invention includes:
a trigger processing module 302, configured to provide a uniform trigger processing and uniform service interaction management function for IMS application services and non-IMS application services according to user subscription data and/or service supporting data;
a call session management module 304, configured to provide a call session control function;
a user management module 306, configured to provide a user data management function;
a protocol interface module 310, configured to provide an underlying protocol process interfacing with another entity; and
a management supporting module 308, configured to provide a supporting function for service operating management.

Here, the user management module 306 is coupled to the protocol interface module 310, communicates with the user subscription data server 202 via the interface E1 to obtain user subscription data, and/or communicates with the service supporting data server 210 via the interface E2 to obtain user service supporting data.

Here, the user management module 306 is coupled to the trigger processing module 302 and is configured to provide at least one of the following information: user subscription data and user service supporting data.

Here, the call session management module 304 is coupled to the protocol interface module 310, communicates with the session control entity 206 via the interface E4 to exchange messages, and communicates with the service control entity 204 via the interface E2 to exchange messages.

Here, the call session management module 304 is coupled to the user management module 306 and is configured to exchange at least one of the following information: user state (e.g., user registration state and/or call state, etc.) and user routing information.

Here, the management supporting module 308 is coupled to the protocol interface module 310, communicates with the offline/online charging system 212 via the interface E5 to exchange charging messages, and/or communicate with the intercepting system 214 via the interface E6 to exchange intercepting messages.

Here, the call session management module 304 is coupled to the management supporting module 308 and is configured to exchange at least one of the following information: charging information and intercepting information.

Here, the call session management module 304 is coupled to the trigger processing module 302 and is configured to at least send information from the interface E4 and/or the interface E2 to the trigger processing module 302.

The trigger processing module 302 includes at least one of the following modules:
a service triggering module 302-2, configured to trigger a service to the service control entity 204 at least according to user subscription data and/or service supporting data; and
a service interaction module 302-4, configured to provide a service conflict management at least according to the configuration data of a service conflict prohibition criterion.

The call session management module 304 includes: a registration management module 304-2, configured to provide a user registration processing and/or user registration state information subscription processing function; and a call session control module 304-4, configured to provide a call session routing function. The call session control module 304-4 may further include at least one of the following modules: an intelligent switch management module 304-6, configured to provide an process control function for an intelligent service protocol and to maintain the processing state of the intelligent service; an OSA service capability management module 304-8, configured to provide an OSA service capability server processing function and to maintain a processing state of an OSA service; and a call forking management module 304-10, configured to fork a message for routing according to user routing information.

The management functions of the user management module 306 include at least one of the following functions: data obtaining, saving, deletion, and update.

The above-mentioned management supporting module 308 includes at least one of the following modules: an intercepting processing module 308-2, configured to at least receive an intercepting command, and/or submit intercepting related information to an intercepting center, and/or send the intercepting command to a media gateway and/or a serving call session control function; and a charging module 308-4, configured to at least collect charging information, to send a message carrying a charging address and a charging identifier to the session control entity 206 and/or the service control entity 204 coupled to the service broker, and/or to send a charging event to the offline/online charging system 212, and/or to perform an online charging function under the online charging system's control. The charging module 308-4 further includes a blended charging module 308-6, configured to perform a blended service charging function.

Embodiment 1 - Registration and session routing after the introduction of the service broker entity 208

This technical solution includes several parts of routing between an S-CSCF and the service broker entity 208, the user registration process after the introduction of the service broker entity 208, and the support for SIP forking by the service broker entity 208, which are described in the following respectively.

Technical solution 1: Routing between an S-CSCF and the service broker entity 208

An S-CSCF and the service broker entity 208 may be provided separately or together. When they are provided separately, there exists an issue of routing between the S-CSCF and the service broker entity 208.

Two methods may be employed for routing between the S-CSCF and the service broker entity 208.

Method 1: The S-CSCF routes the received SIP message to the service broker entity 208 according to iFC. In a way as an SIP message is routed to an application server, a criterion for the routing (triggering) to the service broker entity 208 is configured in the iFC, which includes the name of the service broker entity (the routing address of the service broker entity). Here, to the S-CSCF, the service broker entity 208 is an AS. Therefore the S-CSCF may initiate a trigger to the service broker entity 208 via the iFC configuration. In this way, the S-CSCF determines whether or not to route the message to the service broker entity 208 according to the iFC configuration.

Method 2: The S-CSCF directly sends the received SIP message to the service broker entity 208 according to the name of the service broker entity. Here, the name of the service broker entity may be obtained via pre-settings, for example being pre-set in functional entities such as the user subscription data server 202, the S-CSCF, etc.; the name of the service broker entity may also be carried by a message sent by the session control entity 206. If the name is pre-set in network elements other than S-CSCFs such as the user subscription data server 202, the S-CSCF may obtain the name of the service broker entity during the user registration process. The name of the service broker entity may be an Address-of-Record, a Fully Qualified Domain Name (FQDN), or an IP address.

Furthermore, the S-CSCF also has the capability to trigger to the service control entity 204 according to the iFC. After the introduction of the service broker entity 208, the S-CSCF may have the service broker entity 208 perform triggering to the service control entity 204, forward the received SIP message to the service broker entity 208 for processing, and the S-CSCF routes the SIP message to the calling and called parties after the service broker entity 208 returns the corresponding SIP message to the S-CSCF, i.e., the S-CSCF no longer performs the iFC for the service control entity 204. Alternatively, the S-CSCF may first route the SIP message to the service broker entity 208, and the service broker entity 208 returns the corresponding SIP message to the S-CSCF, and continues performing the existing iFC for the service control entity 204 to route an SIP message to the service control entity 204. Or, the S-CSCF may first perform the existing iFC for the service control entity 204, and then route the SIP message to the service broker entity 208.

Furthermore, instead, there is also a scenario of active routing between the service broker entity 208 and the S-CSCF. That is, the service broker entity 208 voluntarily issues a message to the S-CSCF, or receives an SIP message not from the S-CSCF, performs some relevant processing, and sends a corresponding message to the S-CSCF. For example, the service broker entity 208 voluntarily sends a message to the S-CSCF as an originator, or the service broker entity 208 receives a message sent from the service control entity 204 as an originator. The methods the service broker entity 208 obtains the address of the S-CSCF may be as follows.

Method 1: The address of the S-CSCF is carried within the registration message sent by the S-CSCF to the service broker entity 208, and the service broker entity 208 records the address of the S-CSCF after receiving the registration message including the address of the S-CSCF.

Method 2: The service broker entity 208 queries the user subscription data server 202 for the address of the S-CSCF. For example, the service broker entity 208 uses a Diameter message to query the HSS for the address of the S-CSCF before voluntarily sending a message to the S-CSCF or during the registration process.

Technical solution 2: User registration process after the introduction of the service broker entity 208

The reason for the service broker entity 208 to get involved in the registration process is that it may request the user subscription data server 202 to download the user subscription data and may perceive the user offline/online state, etc., by receiving a registration message. There are several registration methods as follows.

Method 1: The S-CSCF employs a third party registration process as defined in the IMS specifications, and registers a user to the service broker entity 208. After successful registration, the S-CSCF sends the registration message to the service broker entity 208 according to the iFC.

Method 2: After successful registration at the S-CSCF, the S-CSCF always sends the registration message to the service broker entity 208 according to the name of the service broker entity. Because the iFC that includes the name of the service broker entity is not executed, the S-CSCF may obtain the routing address of the service broker entity 208 based on the way of pre-settings, etc.

In the above two methods where registration with the service broker entity 208 follows a successful registration at the S-CSCF, when the registration with the service broker entity 208 fails, the S-CSCF may initiate a registration cancellation process initiated by the network to cancel a user registration, and may not do so.

Method 3: Upon receiving a registration message, the S-CSCF forwards the registration message to the service broker entity 208 according to the name of the service broker entity, and then continues the S-CSCF registration process. Here, whether the registration with the service broker entity 208 is successful or not will have influence on user registration at the S-CSCF. The registration with the service broker entity 208 is a part of user registration with a home domain. For example, if the registration with the service broker entity 208 is unsuccessful and a failure response code is returned, this will lead to user registration failure at the S-CSCF and the S-CSCF may return a message with a registration failure response code to the user. Correspondingly, if the registration with the service broker entity 208 succeeds and then the registration with the S-CSCF fails, the S-CSCF may notify the service broker entity 208 to complete the registration cancellation for that user. The S-CSCF may forward a first registration message (unauthorized) sent during the user registration process to the service broker entity 208, and may also forward a second registration message (authorized) to the service broker entity 208.

Regardless of the method being used, the registration message sent by the S-CSCF to the service broker entity 208 may be a third party registration (the From header carries the address of the S-CSCF), or may be a first party registration (the From header carries the registration user identifier). Also, both the address of the S-CSCF and the registration user identifier may be carried within the registration message simultaneously.

Upon receiving a registration message, the service broker entity 208 requests the user subscription data server 202 to download the user subscription data. It may further request the service supporting data server 210 to download the user service supporting data.

Furthermore, upon receiving a registration message, the service broker entity 208 may record the contact address of the registered user, globally routable user agent uniform resource identifier (GRUU), preference setting (terminal capability of a user), and other routing information for a registered user terminal carried within the registration message.

In the IMS registration flow, a network element or terminal may issue a subscription request for user registration state information and receive notification for user registration state information. An event package corresponding to subscription and notification currently is defined as reg.

The user registration state information subscription issued by a network element or a terminal may be processed by the S-CSCF or by the service broker entity 208. For situations where the user registration state information subscription events are processed by the service broker entity 208, the service broker entity 208 supports at least the following user registration state change events:
- Registered (initial registration of IMPU)
- Created (IMPU is implicitly initially registered)
- Refreshed (re-registration of IMPU)
- Shortened (re-authorization initiated by the network)
- Deactivated (registration cancellation initiated by the network with a provision that later registration is allowed)
- Probation (registration cancellation initiated by the network with a provision that registration at a later time is mandatory)
- Unregistered (deregistration initiated by a user)
- Rejected (deregistration initiated by the network with a provision that later registration is not allowed)

Besides receiving and processing the subscription request for user registration state information, the service broker entity 208 may issue a subscription request for user registration state information to the S-CSCF. If the user registration state information defined in the current specifications is extended so that the above-mentioned routing information of a registered user terminal such as contact address, GRUU, preference setting, etc., may be included, the service broker entity 208 may obtain this routing information via notification messages sent by the S-CSCF with regard to the subscription.

Technical solution 3: The service broker entity 208 supports forking (SIP forking)

The SIP has the capability of forking. As above, the service broker entity 208 may obtain the routing information of a registered user terminal, such as the contact address, preference setting, etc., via a registration message forwarded by, or a subscription notification message sent by the S-CSCF. Therefore, the forking function may be accomplished at the service broker entity 208.

The forking policy processing at the service broker entity 208 complies with the processing description according to 3GPP 24.229. The routing to the called UE after forking of the service broker entity 208 may be accomplished by the service broker entity 208 itself, or by the S-CSCF. For the former, the registration message forwarded by the S-CSCF to the service broker entity 208 needs to carry the address of the P-CSCF; for the latter, in the case where the service broker entity 208 has performed the forking processing, to prevent the S-CSCF from forking again after forking by the service broker entity 208, the service broker entity 208 needs to notify the S-CSCF of an indicator of forking prohibition (forking has been processed). For example, the header Request-Disposition of the INVITE message sent by the service broker entity 208 to the S-CSCF needs to be set as "no-fork" to prohibit the S-CSCF from performing forking process again.

Embodiment 2: Dialogue management and user management of the service broker entity 208

The present technical solution includes two parts, i.e., dialogue management and user management of the service broker entity 208, the details of which are described as follows.

Technical solution 1: Dialogue management of the service broker entity 208

The service broker entity 208 supports management for dialogue with the session control entity 206 and dialogue with the service control entity 204, as is illustrated below.

When the SIP is used between the service broker entity 208 and the service control entity 204, in order to enable dialogue association for the service control entity 204 operating in both SIP Proxy and SIP B2BUA modes, the service broker entity 208 performs association of the SIP sessions in one of the following manners that: the service broker entity 208 further adds a dialogue identifier (ID) when adding its address to the header Route, and the service broker entity 208 will use this dialogue ID to associate the INVITE request issued to the service control entity 204 and the INVITE request received from the service control entity 204.

When the protocol used by the service broker entity 208 and the service control entity 204 is one of INAP, CAP, and MAP, the service broker entity 208 performs dialogue association via the dialogue ID of the Transaction Capabilities Application Part (TCAP) protocol.

During a session, in cases where the service broker entity 208 invokes a plurality of services via an SIP message, a separate dialogue may be used for each service and the service broker entity 208.

Technical solution 2: User management of the service broker entity 208

The user management of the service broker entity 208 includes at least obtaining user presence information, obtaining the terminal capability and preference information of a user, obtaining user state data, and obtaining user routing information. The way for the service broker entity 208 to obtain the above information is as follows.

Presence information is an important basis for service triggering. The service broker entity 208 supports obtaining of user presence information, the implementations for which include the following.

1. A user publishes presence information by a PUBLISH message. The PUBLISH message is routed to the service broker entity 208 by the session control entity 206. During this process, the service broker entity 208 stores the presence data in the PUBLISH message locally. Then, the PUBLISH message may also be routed further by the service broker entity 208 or by the service broker entity 208 to the presence server via the session control entity 206.

2. The service broker entity 208 obtains the presence information of a specific user from the presence server by way of subscription. The service broker entity 208 may obtain the address of the presence server in one of the manners of obtaining via data configuration, specifying by a program segment, and specifying by a script.

3. The service broker entity 208 passes a call request message originated by a user to a presence server. The presence server adds the presence information of the user into the call request message and returns the call request message to the service broker entity 208.

The service broker entity 208 supports obtaining of the terminal capability and preference information of a user, the implementation of which includes the following.

1. A user publishes the presence information that carries the terminal capability and preference through a PUBLISH message. The PUBLISH message is routed to the service broker entity 208 via the session control entity 206. During this process, the service broker entity 208 stores the terminal capability and preference data of a user in the PUBLISH message locally.

2. A terminal carries the terminal capability and preference information in a registration message, the session control entity 206 forwards the registration message to the service broker entity 208, and the service broker entity 208 stores the terminal capability and preference information data in the registration message locally.

3. The service broker entity 208 voluntarily obtains the terminal capability and preference information of a user from an external server. The ways of obtaining may be one of, but not limited to, the following.

The terminal carries the UA Profile URL address in an SIP message. The service broker entity 208 downloads the UA profile data of the user from the corresponding path at the UA Profile server indicated by the corresponding UA Profile URL, so as to obtain the terminal capability and preference information data of the user. The UA Profile URL address may be carried by messages including, but not limited to, an SIP REGISTER message, an INVITE message, and a PUBLISH message. The UA Profile URL address may be carried by way of extending the SIP header, or may be carried by an SIP message parameter or an SIP message body, the specific details of which are omitted here.

The service broker entity 208 obtains the UA Profile URL of a user from an external server. The service broker entity 208 downloads the UA profile data of the user from the UA Profile Server indicated by the corresponding UA Profile URL to obtain the terminal capability and preference information data of the user. The way of obtaining the UA Profile URL address may be (but is limited to) such that the user subscription data server 202 carries the UA Profile URL address of the user during the registration process.

The service broker entity 208 sends an INVITE message to a specified external server that stores the terminal capability and preference information data of the user. The INVITE message carries a special header or a parameter, indicating the needs to obtain the terminal capability and preference information data of the user.

The service broker entity 208 sends a SUBSCRIBE message to a specified external server that stores the terminal capability and preference information data of a user, to request the terminal capability and preference information data of the subscribed user.

The specified external server that stores the terminal capability and preference information data of a user publishes the terminal capability and preference information data of the user via a PUBLISH message to the service broker entity 208.

In the last three ways, the address of the specified external server that stores the terminal capability and preference information data for a user, may be obtained by a data configuration, specified by a program segment, or specified by a script.

The service broker entity 208 supports obtaining of user state data, an example of which, i.e., the user busy state, is given below.

The user busy state is classified into two types, i.e., network determined busy state and user determined busy state. Here, the user determined busy state refers to a situation where a message is to be sent to a user terminal and the user terminal indicates busy by responding with a response message; the user busy state determined by the network is referred to as Network Determined User Busy (NDUB), that is, the network determines that the user is busy before a call reaches the user terminal, i.e., determining that the user is currently busy or idle. Meanwhile, there is another busy state determined by the network, known as Approaching Network Determined User Busy (Approaching NDUB). The Approaching NDUB may be based on user subscription and it is determined whether a user is approaching NDUB by determining whether a resource threshold limited by the user has been reached.

A user determined busy state may be known by the service broker entity 208 naturally via an SIP message. But for NDUB and approaching NDUB states, support from a network element is needed. The NDUB and approaching NDUB states are important basis for service triggering. The service broker entity 208 supports obtaining of this user state data, the implementations of which include the following.

1. The service broker entity 208 itself has the function of determining NDUB and/or approaching NDUB. The service broker entity 208 determines whether a user is busy or approaching busy by using the user resource limitation information (e.g., maximum subscription bandwidth information) and occupancy of the current session resource for the user (i.e., the occupied bandwidth) obtained from the user subscription data server 202.

2. The service broker entity 208 obtains a user busy state from an external NDUB server. The way of obtaining may be, but is not limited to, the following: sending a SUBSCRIBE message to subscribe to the user NDUB/Approaching NDUB state; sending, voluntarily, by the NDUB server, a PUBLISH message to the session control entity 206 to publish the user NDUB/Approaching NDUB state and routing the message to the service broker entity 208 via the session control entity 206; and indicating, by the service broker entity 208, via a special header or header parameter in an INVITE message that obtaining the user NDUB/Approaching NDUB state is needed. An entity in the message path that has an NDUB and/or Approaching NDUB function notifies the service broker entity 208 via an SIP response message, e.g., sending a response code 486 when the user is busy.

For the service broker entity 208 to obtain a user busy state from an external NDUB server, the address of the NDUB server may be obtained by a data configuration, specified by a program segment, or specified by a script.

Embodiment 3: Support of a charging/intercepting function by the service broker entity 208

Technical solution 1: Support of an intercepting function

Lawful intercepting is a law enforcement act performed by a Law Enforcement Agency (LEA) with authorization by a relevant authority to intercept communication services of public communication networks according to state laws and industrial regulations of public communication networks.

According to requirement of intercepting, the service broker entity 208 needs to provide a lawful intercepting function, which includes the following.

The service broker entity 208 may transfer the Intercept Related Information (IRI) of an intercepted object to a Delivery Function (DF) entity. The service broker entity 208 may receive the intercepting data of the intercepted object, including one or more of the following information: an identifier of an intercepted object, a flag indicative of whether one or more parties of the message are being intercepted, a delivery function entity address, an activation indicator of an intercepted object, a query indicator of an intercepted object, and an attribute modification indicator of an intercepted object.

The service broker entity 208 may obtain intercepted data in a manner that a lawful intercepting Administration Function (ADMF) entity delivers intercepted data, or that the intercepted data is obtained from another entity that receives the intercepted data. As an example, the S-CSCF carries the intercepted data to the service broker entity 208 via an SIP message. As another example, the service broker entity 208 obtains the intercepted data by downloading from another entity that receives the data, e.g., an HSS, after receiving a registration message.

The service broker entity 208 may also control the Content of Communication (CC) of the intercepted object that the media gateway transfers to the Delivery Function (DF) entity. When a user is to be intercepted, the service broker entity 208 adds the media gateway to the session media path of that user, and the media gateway receives and transfers the media stream of the user to the DF.

Technical solution 2: Support for a charging function

The charging function supported by the service broker entity 208 includes the following.

SIP, Diameter protocol, etc., may be employed between the service broker entity 208 and the offline/online charging system 212. The service broker entity 208 may submit charging information to the offline/online charging system 212 and may perform an online charging function under the charging system's control.

When the SIP session request message received by the service broker entity 208 from the session control entity 206, e.g., an INVITE message including a P-Charging-Function-Addresses header, the service broker entity 208 communicates with the offline/online charging system 212 according to the included charging address.

When the SIP session request message received by the service broker entity 208 from the session control entity 206 does not include a P-Charging-Function-Addresses header, the service broker entity 208 obtains the charging address of the offline/online charging system 212 according to user subscription charging address data obtained from the user subscription data server 202. The service broker entity 208 communicates with the offline/online charging system 212 according to the included charging address, and generates a P-Charging-Function-Addresses header in the SIP session request message to be sent to carry the charging address.

When the SIP session request message received by the service broker entity 208 from the session control entity 206 does not include a P-Charging-Vector, the service broker entity 208 generates an IMS Charging ID (ICID) and a P-Charging-Vector header which at least includes an ICID parameter.

When the service broker entity 208 needs to be routed to a network element of another operator, for example when invoking a service at a third party AS, the service broker entity 208 generates an InterOperator Identifier (IOI) and adds the identifier to the P-Charging-Vector header at the same time.

To be able to associate the chargings of the same call, when the SIP message received by the service broker entity 208 from the session control entity 206 includes a P-Charging-Vector header, all the messages related to the session sent by the service broker entity 208 use the ICID in the P-Charging-Vector header.

The service broker entity 208 may provide a blended service. Here, the service broker entity 208 provides a blended service different from any of services at the service control entities 204 by interacting with a plurality of the service control entities 204. As each service control entity 204 performs charging individually, and there is a need for a blended service to perform a uniform charging for the same blended service. The service broker entity 208 provides a blending application charging identifier, and the blending application charging identifiers corresponding to different blended services are different.

The service broker entity 208 may employ, but is not limited to, the following methods. The service broker entity 208 may add a blending application charging identifier parameter in the P-Charging-Vector header to be transferred to each of the service control entities 204, which transfers it to the offline/online charging system 212 when sending a charging message. Alternatively, the service broker entity 208 may not transfer it to the service control entity 204, and rather, the service broker entity 208 may transfer it to the offline/online charging system 212 when sending a charging message.

The service broker entity 208 and/or the service control entity 204 may transfer a blending application charging identifier to the offline/online charging system 212 via the Diameter protocol. A new AVP is extended in the Diameter protocol, e.g., a Blending-Application-Charging-Identifier AVP is added to carry the blending application charging identifier. Alternatively, the new AVP may not be extended, and instead, a parameter is added to some original charging AVP, e.g., adding a Blending-Service-ID parameter in the IMS-Information AVP. The Diameter protocol AVP and parameter may not be extended, e.g., the service broker entity 208 uses the Service-ID parameter in the IMS-Information AVP to carry an blending application charging identifier. The Service-ID in the 3GPP specification is only used in Multimedia Resource Function Controller (MRFC). Here, the offline/online charging system 212 needs to be able to recognize the blending application charging identifier filled by the service broker entity 208, and the specific recognition method may be based on (but not limited to) the source address recognition of the sent charging message.

The blending application charging identifier generally includes a blended service application identifier and/or a blended service association identifier. The blended service application identifier may be a specific string identifier to identify a different blended service. The offline/online charging system 212 may charge different blended service accordingly. The service broker entity 208 may generate a blended service application identifier according to a received communication message and/or an indicator of a blended service application carried in pre-configured data (e.g., service triggering criterion data). The service broker entity 208 generates a blended service application identifier following some criterion according to the indicator. If the indicator identifies a blended service, it can also be used as the blended service application identifier.

The blended service association identifier is used to associate a blended service used between different service control entities 204. It may be a dynamically generated string identifier. For example, AS1 and AS2 jointly provide a blended service for a user. The service broker entity 208 may dynamically generate a blended service association identifier to be transferred between AS1 and AS2 according to the received communication message and/or an indicator of a blended service application carried in pre-configured data (e.g., service triggering criterion data). Accordingly, the offline/online charging system 212 identifies that AS1 and AS2 have jointly provided a blended service. The blended service application identifier may also be used as the blended service association identifier.

Embodiment 4: Uniform management of IMS application services and non-IMS application services

The above IMS application server may involve three types of application servers defined by 3GPP: SIP application server, Open Service Access (OSA) application server and IMS Service Switch Function (IM-SSF). A non-IMS application server may involve at least one of the following types of servers: an intelligent network service control function (SCF) entity, an OSA application server, and a soft switch. The embodiments of the present invention refer to the services provided by an IMS application server as IMS application service and the services provided by a non-IMS application server as non-IMS application service.

The uniform management for the above-mentioned IMS application service and non-IMS application service at least includes: uniform trigger processing for IMS application service and non-IMS application service, and uniform service interaction management for IMS application service and non-IMS application service.

The service broker entity 208 receives a message from the session control entity 206 or the service control entity 204 and triggers the message to the service control entity 204 according to the user data of a user corresponding to the user. The service control entity 204 includes the above-mentioned IMS application server and non-IMS application server. To facilitate uniform trigger processing and service interaction management, an IMS application and a non-IMS application may use uniform service triggering criterion data.

The present embodiment first illustrates triggering of a conventional service at the service broker entity 208 (triggering to a service control function entity of an intelligent network) and a service at an IMS application server. Here, the exemplary operation flow is as follows.

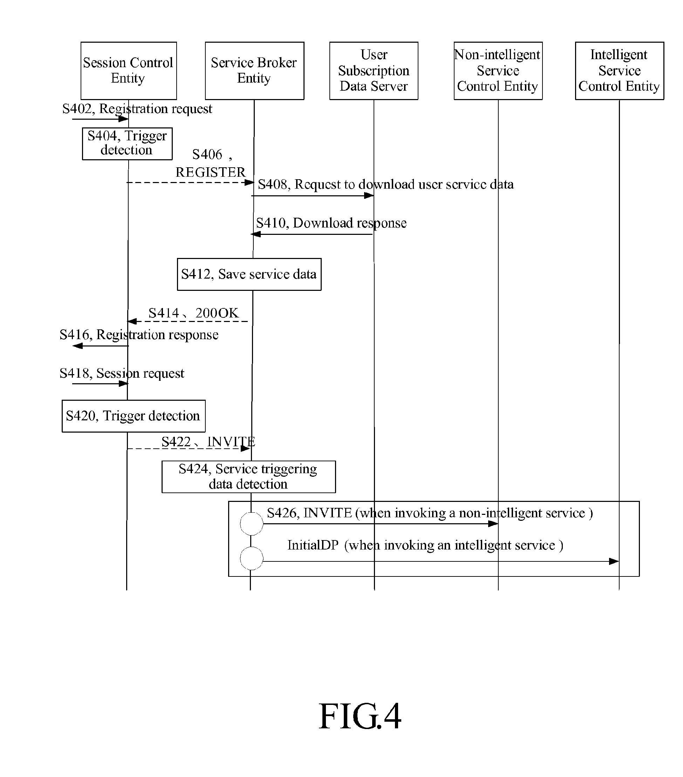

In FIG. 4, as an example, the service broker entity 208 triggers an intelligent service to support the CAP interface. The service broker entity 208 may also use INAP and ANSI-41 MAP interfaces to trigger an intelligent service.

The above flow is illustrated as below.

In step S402, the session control entity 206 receives a registration request from a terminal. For example, the session control entity 206 receives an SIP registration request message when it is an S-CSCF.

In step S404-S406, the session control entity 206 checks if it is necessary to forward the message to the service broker entity 208. The forwarding check may be performed by checking the iFC configuration or by checking the name of the service broker entity. For details, please refer to the description of "Routing between an S-CSCF and the service broker entity 208".

In step S408-S410, after the session control entity 206 forwards the session to the service broker entity 208, the service broker entity 208 requests the user subscription data server 202 for service subscription data of the user, e.g., IMS service triggering criterion data of the user. The service broker entity 208 may further request the service supporting data server 210 for user service supporting data. The IMS service triggering criterion data and the intelligent service triggering criterion data may use uniform service triggering criterion data. In uniform service triggering criterion data, different types of the service control entity addresses and triggering protocols and/or triggering messages may be specified. In uniform service triggering criterion data, different local processes that trigger different types of services may be specified. In uniform service triggering criterion data, service identifiers for different services may also be uniformly specified. For example, PrePaid Service (PPS) intelligent service triggering criterion data may use the service filter criterion data configured as below.

```
       .........................
       <ApplicationServer>
              <ServerName>spAddr:8675528970132; addrType= GT </ServerName>
              <InvokingProtocol>CAP; version=3</InvokingProtocol>
              <InvokingMessage>InitialDp; serviceKey= 1</InvokingMessage>
              <ServiceId>IN-CAP-1</ServiceId>
       </ApplicationServer>
```

In this example, the address of the service control entity (the corresponding intelligent SCP) is configured in the ServerName part of the iFC. Here, the value of ServerName is extended to support other types of addresses. Here, for example, spAddr: 8675528970132; addrType= GT denotes that the signaling point address is 8675528970132 and the identification for a signaling point is global title (GT). In the above example, an InvokingProtocol tag is added, whose value of "CAP; version=3" denotes that the protocol type of the service control entity 204 is CAP protocol, and the subsequent parameter version=3 is the version number of the CAP protocol, indicating support of the CAP protocol in CAMEL phase 3. In the above example, another tag InvokingMessage is also used, whose value of "InitialDp; serviceKey=1" denotes the message invoking the service control entity 204 is InitialDp, and the subsequent parameter serviceKey corresponds to the service key parameter in InitialDp. Yet another tag ServiceId is also added in the above example, configured to uniformly denote different services triggered at the service broker. Here, the ServiceId used by the PPS intelligent service is IN-CAP-1.

The above PrePaid Service (PPS) triggering criterion data may also use the service filter criterion data configured as below.

```
       .........................
       <ApplicationServer>
              <ServerName>INTriggerProcess@triggerPoint1.home.net;
              spAddr:8675528970132; addrType= GT ; protocol= CAP; version=3;
              serviceKey=1</ServerName>
              <ServiceId>IN-CAP-1</ServiceId>
       </ApplicationServer>
```

Here, INTriggerProcess@triggerPoint1.home.net corresponds to a local process INTriggerProcess at the service trigger point (the address of the service trigger point is triggerPoint1.home.net). For example, INTriggerProces is a program or a script of intelligent service triggered at the service trigger point. The INTriggerProcess processing may carry a parameter. In this example, the parameter "spAddr:8675528970132; addrType= GT ; protocol= CAP; version=3; serviceKey=1" is carried and denotes that the SCP address is 8675528970132, the address type is GT, the triggering protocol type is CAP protocol, the CAP protocol of CAMEL phase 3 is supported, and the service key of the triggering message is 1. In the above example, a ServiceId tag is also added, and configured to uniformly denote different services triggered at the service broker. Here, the ServiceId used by the PPS intelligent service is IN-CAP-1.

In steps S412-S416, the service broker entity 208 obtains the service subscription data of the user queried for, then saves it locally, and responds with a registration success response. The session control entity 206 also responds with a registration success response to the terminal.

In steps S418-S422, when a user initiates a session, the session control entity 206 checks if it is needed to forward a message to the service broker entity 208.

In steps S424-S426, when the service control entity 204 transfers the session to the service broker entity 208, the triggering detection process of the service broker entity 208 uniformly processes the detection of intelligent service triggering and non-intelligent service triggering by using a uniform service triggering criterion. The basis of detection at least includes user subscription data, user service supporting data, and/or the execution state of the invoked service (e.g., service execution success or failure). When the present call triggers a non-intelligent service, the service broker entity 208 sends an SIP message to a non-intelligent service control entity. When the present call triggers an intelligent service, the service broker entity 208 sends a CAP IntialDp message to the intelligent service control entity. In the above figure, the two messages in step S426 are alternative.

According to the above exemplary flow, the above-mentioned service broker entity 208 may at least have the following capabilities:
- support of one or more of CAP, INAP, and ANSI-41 MAP protocols;
- support of obtaining user intelligent subscription data;
- support of triggering an intelligent call according to intelligent subscription data;
- support of conversion between CAP, INAP, and ANSI-41 MAP and SIP protocols, and providing a service exchange function; and
- support of triggering a service at an IMS application server and a conventional intelligent service.

Because the service broker entity 208 uniformly processes triggering determination of intelligent calls and non-intelligent calls, the service broker entity 208 may uniformly support service interaction management for intelligent service and non-intelligent service. For example, service conflict management may be performed according to service identifiers that denote different services uniformly and a service conflict prohibition criterion that uses such service identifiers that denote different services. For example, users are not allowed to use a Free Phone (FPH) service when they are using the pre-paid service provided by an IMS application server. Here, for example, it is assumed that the service identifiers they use at the service broker entity 208 are IMS-PPS and IN-FPH, respectively, and the two service identifiers both exist in the service conflict prohibition configuration data. Then, the service broker entity 208 prevents the user from invoking an intelligent network FPH service when they use an IMS pre-paid service.

Functions of the service control entity 204 may be partly built in the service broker entity 208, e.g., a built-in Paylay gateway function. Here, a service broker function entity and a built-in service control entity 204 function may use an interface such as OSA API or an internal interface to enable communication.

As is similar to the above-mentioned example that triggers an intelligent service, because service triggering is provided at the same node, the service broker entity 208 may uniformly support triggering of different services provided by different service control entities 204 (including an IMS application server, and/or an intelligent service control function entity, and/or an OSA application server and/or a soft switch) and management for interactions between these services. For example, these services use uniform service triggering criterion data, where different types of the service control entity addresses and types of triggered protocols and/or triggered messages may be specified. Different local processes of different types of services may also be specified in uniform service triggering criterion data. Service identifiers denoting different services may also be uniformly specified in uniform service triggering criterion data. Because key processes are similar to that of the example of triggering an intelligent service, the specific details are omitted herein.

Embodiment 5: Service supporting data assists service trigger control

Generally, user service supporting data may be used to match a triggering criterion in service triggering criterion data to decide on service triggering. As mentioned above, the service broker entity 208 may obtain service supporting data with two methods. Method 1: After receiving a user registration/session request message or the like from a serving call session control function, the service broker entity 208 may request the service supporting data server 210 for user service supporting data; Method 2: The service broker entity 208 routes the user registration/session request message or the like to the service supporting data server 210, and the service supporting data server 210 carries the user service supporting data within a returned response message for the request.

In method 2, the service broker entity 208 receives a communication request message and sends it to the service supporting data server 210 via the Interface E3. The service supporting data server 210 appends user service supporting data to a response message for the communication request and returns it to the service broker entity 208 via the interface E3. The service broker entity 208 obtains user service supporting data from the response message and uses the service supporting data and other necessary triggering content for matching the service triggering criterion data to perform service triggering.

Here, the basis that the service supporting data server 210 appends user service supporting data to the response message for the communication request: without any condition, or according to an indicator in a received communication request message, or according to an indicator pre-configured in the service supporting data server 210, or according to an indicator obtained by the service supporting data server 210 from another network element, such as the user subscription data server 202.

Here, methods for appending different service supporting data to a response message for a communication request are different, which are respectively described below.

Presence information data of a user, geographical location information data of a user, and terminal capability of a user may be directly appended to a response message for a communication request.

Preference setting data of a user refers to a preference set for a service application by a user, e.g., setting the monitoring period duration of no answer for a service whose triggering condition is no answer (e.g., call forwarding with no answer), an indicator of whether to use the time of a roaming location or the time of a home location as the service triggering time while roaming, or directly set different triggering times for different services. Preference setting data of a user may be directly appended to a response message for a communication request, and may also be implicitly appended to a response message for a communication request in an indirect way. For example, when a user has set the monitoring period duration of no answer, the service supporting data server 210 may directly append the monitoring period duration of no answer to a response message for a communication request so that the service broker entity 208 monitors the no answer state of the user according to the monitoring period duration of no answer; or, the service supporting data server 210 monitors the no answer state of the user according to the monitoring period duration of no answer and when the state of no answer has been reached, the service supporting data server 210 appends the no answer state of the user to a response message for a communication request, e.g., sending an SIP response code message indicating that the user has no answer. For another example, when a user sets an indicator of whether to use the time of a roaming location or the time of a home location as the service triggering time while roaming, that indicator may be directly appended to a response message for a communication request, or, the service supporting data server 210 may append the time of a roaming location or the time of a home location to a response message for a communication request according to the indicator.

User state data may be directly appended to a response message for a communication request, or may be implicitly appended to a response message for a communication request in an indirect way. For example, the service supporting data server 210 may directly return a response message for a communication request indicating the state of busy, idle, no answer, and the like of the user, or may append the monitoring period duration of no answer to a response message for a communication request. The execution state of the invoked service of a user may be directly appended to a response message for a communication request.

Here, when the service supporting data server 210 receives a communication request message, it may return service supporting data via a response message for a communication request immediately, or may return service supporting data after a period of time, e.g., when returning a "no answer" state.

Here, when the service broker entity 208 has obtained service supporting data, it may immediately use the service supporting data to perform service triggering, or may use the service supporting data to perform service triggering after a period of time, e.g., obtaining the monitoring period duration for "no answer".

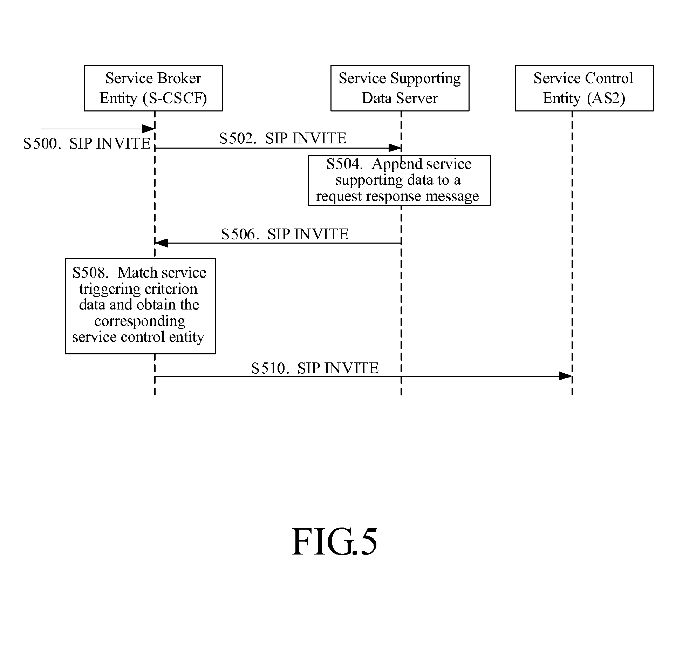

In the following, two preferred implementing flows for the service broker entity 208 to obtain service supporting data are given. FIG. 5 is an implementing flow where the service supporting data server 210 is located at the service control entity 204. The flow is illustrated as follows.

In step S500, the service broker entity 208 receives an SIP initial request message, e.g., an SIP INVITE message. As a preferred implementation, the service broker entity 208 is an S-CSCF.

In step S502, the service broker entity 208 sends the SIP INVITE message to the service supporting data server 210. As a preferred implementation, the service supporting data server 210 is located at a service control entity 204 (AS1). The service broker entity 208 may send an SIP INVITE message to AS1 after service triggering criterion data is executed and the address of AS1 is obtained.

In step S504, the service supporting data server 210 appends the service supporting data to a response message for a request, e.g., an SIP INVITE message, after it receives the SIP INVITE.

In step S506, the service supporting data server 210 sends the SIP INVITE message carrying service supporting data to the service broker entity 208.

In step S508, the service broker entity 208 receives the SIP INVITE message, matches service triggering criterion data according to the content of the message, and obtains the address of the corresponding service control entity 204, e.g., AS2. Service supporting data is a part of the content of the message. Therefore, when the service supporting data is described in the service triggering criterion data as a triggering criterion, the service supporting data plays a role of assisting service trigger control.

In step S510, the service broker entity 208 sends an SIP INVITE message to AS2.

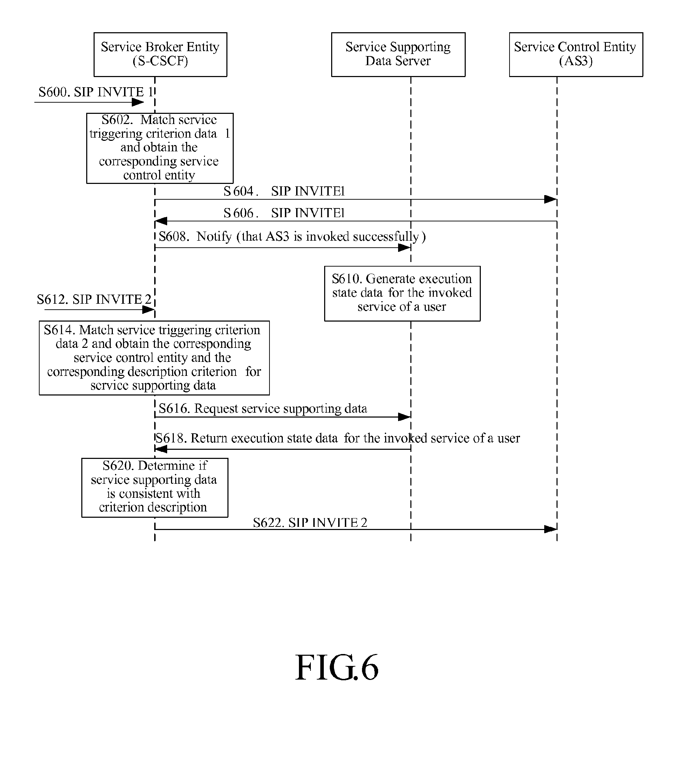

FIG. 6 is an implementing flow where the service supporting data server 210 is located at the service broker entity 208. The flow is illustrated as follows.

In step S600, the service broker entity 208 receives an SIP initial request message, e.g., an SIP INVITE1 message.

In step S602, the service broker entity 208 matches the service triggering criterion data 1 and obtains the address of the corresponding service control entity 204, AS3.

In step S604, the service broker entity 208 sends the SIP INVITE1 message to AS3.

In step S606, AS3 performs the corresponding service control and returns an SIP INVITE1 message.

In step S608, the service broker entity 208 notifies the service supporting data server 210 that AS3 is invoked successfully. As a preferred implementation, the service supporting data server 210 is located at the service control entity 204 and the notification is transferred via an internal interface E3. The service broker entity 208 may issue the notification unconditionally, or may issue the notification according to pre-set data, e.g., the pre-set data in the service triggering criterion data 1.

In step S610, the service supporting data server 210 generates execution state data of the invoked service of a user, i.e., AS3 is invoked successfully. As mentioned above, the execution state of the invoked service of a user may be an execution state of a specific service control entity 204.

In step S612, the service broker entity 208 receives another SIP initial request message, e.g., an SIP INVITE2 message.

In step S614, the service broker entity 208 matches the service triggering criterion data 2, and obtains the address of the corresponding service control entity 204, AS3 and its corresponding description criterion in the service supporting data. For example, the criterion specifies whether AS3 is to be invoked now depending on whether or not it has been invoked.

In step S616, the service broker entity 208 requests the service supporting data server 210 for related service supporting data.

In step S618, the service supporting data server 210 returns the execution state data of the invoked service of a user, i.e., AS3 has been invoked successfully.

In step S620, the service broker entity 208 determines whether the received service supporting data is consistent with the above criterion description, i.e., whether AS3 has been invoked successfully. If the received service supporting data is consistent with the above criterion description, AS3 will be invoked now.

In step S622, the service broker entity 208 now invokes AS3, and sends the SIP INVITE2 message to AS3.

As can be seen, a difference between FIGs. 5 and 6 with regard of service supporting data assisted service trigger control is as follows. In the implementing flow in FIG. 5, when the service broker entity 208 performs matching of service triggering criterion data, the service broker entity 208 has already obtained the service supporting data (carried within the SIP message for matching service triggering criterion data). The service supporting data assists service trigger control by matching the trigger description criterion for the service supporting data in the service triggering criterion data. While in the implementing flow in FIG. 6, the service broker entity 208 has not obtained the service supporting data yet when performing the matching of the service triggering criterion data. The service broker entity 208 obtains the trigger description criterion for the service supporting data after performing the matching of the service triggering criterion data. Then the service broker entity 208 requests for the corresponding service supporting data accordingly, and assists service trigger control according to the matching relationship between the service supporting data and trigger description criterion for the service supporting data.

The implementation for the service broker entity 208 to determine whether the description criterion for the service supporting data is matched in order to assist service trigger control has been described above. Moreover, an embodiment of the present invention further provides another solution. In this solution, the service broker entity 208 may have the service supporting data play a role of assisting service trigger control even without having to obtain the description criterion for service supporting data. When the current service supporting data of the user is consistent with a description criterion of the service supporting data identifying the activation of the associated service triggering criterion data, the service triggering criterion data is sent to the service broker entity 208.

In particular, whether the service triggering criterion data is activated (i.e., whether it is valid) depends on the description criterion of the associated service supporting data. Only if the description criterion of the service supporting data is currently matched, the service triggering criterion data is sent to the service broker entity 208. For example, if the service supporting data server 210 obtains service triggering criterion data and the description criterion of its activation associated service supporting data in advance, when the description criterion of the service supporting data is currently matched, the service triggering criterion data is directly sent to the service broker entity 208 by the service supporting data server 210, or the service triggering criterion data is indicated by the service supporting data server 210 to the user subscription data server 202 to be sent to the service broker entity 208. For another example, if the service supporting data server 210 obtains the identifier of the service triggering criterion data and the description criterion of its activation associated service supporting data, when the description criterion for the service supporting data is now matched, the service triggering criterion data is indicated by the service supporting data server 210 to the user subscription data server 202 to be sent to the service broker entity 208.

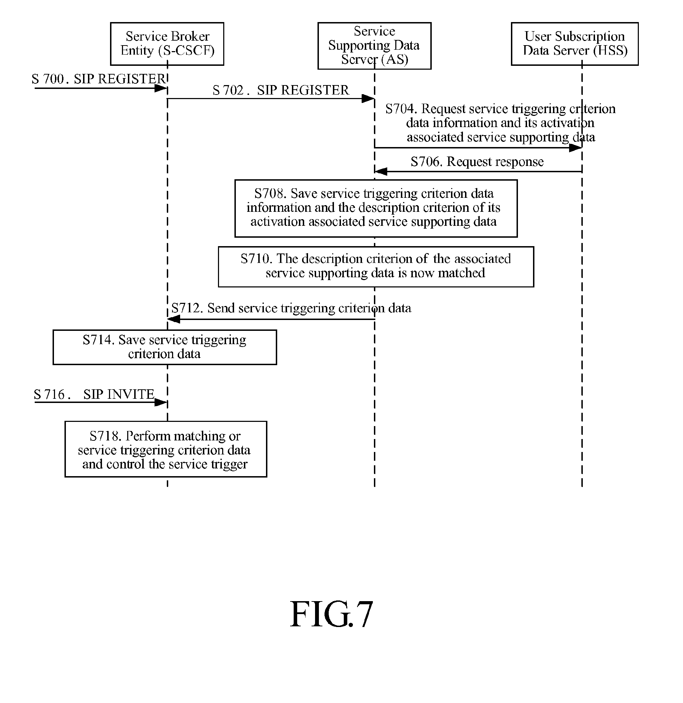

FIG. 7 is an implementing flow of the above solution, illustrated as follows.

In step S700, the service broker entity 208 receives an SIP REGISTER registration message from a user.

In step S702, the service broker entity 208 sends the SIP REGISTER registration message to service supporting data server 210. As a preferred implementation, the service supporting data server 210 is located at a service control entity 204 AS. The service broker entity 208 may send the SIP REGISTER registration message to the service supporting data server 210 according to a third party registration.

In step S704, the service supporting data server 210 receives the SIP REGISTER registration message, requests user subscription data server 202 for service triggering criterion data information and the description criterion of its activation associated service supporting data. It is to be noted that the service broker entity 208 may still request the user subscription data server 202 for service triggering criterion data without the activated identification by the description criterion of the associated service supporting data. As a preferred implementation, the user subscription data server 202 is an HSS.

In step S706, the user subscription data server 202 responds to the request and sends the service triggering criterion data information and the description criterion of its activation associated service supporting data to the service supporting data server 210. Here, the service triggering criterion data information may be the service triggering criterion data, or the identifier of the service triggering criterion data.

In step S708, the service supporting data server 210 saves the service triggering criterion data information and the description criterion of its activation associated service supporting data.

In step S710, the description criterion for the activation associated service supporting data is now matched. For example, the description criterion for service supporting data is a type of presence information data of a user, with a value of "in meeting". Then, when the current presence information data of a user is set as "in meeting", the description criterion for service supporting data is now matched. For another example, the description criterion for the service supporting data is a type of user state data, with a value of the above-mentioned execution state of a specific service control entity 204 as "success". Then, when the service control entity 204 has been successfully invoked, the description criterion for service supporting data is now matched. For still another example, the description criterion for service supporting data is a type of user state data, with a value of the state of the specific service data configuration of a user as "success". Then, when the service data has been successfully configured, the description criterion for service supporting data is now matched. For yet still another example, the description criterion for service supporting data is a type of preference setting data of a user, with a value of the triggering time for a specific service as "after 8:00pm". Then, after 8:00pm, the description criterion for service supporting data is now matched.

In step S712, if the service supporting data server 210 has obtained the service triggering criterion data associated with the activation associated service supporting data, service supporting data server 210 sends the service triggering criterion data to the service broker entity 208. Alternatively, the service supporting data server 210 may indicate the user subscription data server 202 to send the corresponding service triggering criterion data to the service broker entity 208. Moreover, if the service broker entity 208 has already obtained the inactivated, associated service triggering criterion data, where "inactivated" means that the description criterion of the activation associated service supporting data in the service triggering criterion data is not matched, then in this step, the service supporting data server 210 may directly or indirectly (e.g., via the user subscription data server 202) activate the service triggering criterion data at the service broker entity 208.

In step S714, the service broker entity 208 saves the service triggering criterion data.

In step S716, the service broker entity 208 receives an SIP initial request message, e.g., an SIP INVITE message.

In step S718, the service broker entity 208 performs matching of the service triggering criterion data, obtains the address of the corresponding the service control entity 204, and controls service triggering.

As can be seen, different from the implementing flows in FIGs. 5 and 6, in the implementing flow in FIG. 7, the service supporting data server 210 determines if the description criterion for service supporting data is matched to assist service trigger control.

It is to be noted that the service supporting data server 210 may always obtain various service supporting data unconditionally in advance, e.g., requesting a Presence server to obtain presence information data of a user. Alternatively, the presence information data set by a user may be obtained via the service supporting data server 210. Or, the service supporting data server 210 may request for the service supporting data corresponding to the description criterion after obtaining the description criterion for service supporting data, e.g., the presence information data of a subscribed user. Moreover, the dynamic service supporting data related to a call usually may be obtained during the current call, e.g., current busy state of a user, current call time of a user, obtaining which service control entities 204 have been successfully invoked by a signaling message (the address of the successfully invoked service control entity 204 will be added to the signaling message), etc.

Furthermore, the service supporting data described in the description criterion for service supporting data and the service supporting data used for matching may be consistent, e.g., presence information data of a user. Alternatively, they may be inconsistent, e.g., when the description criterion for service supporting data is preference setting data of a user, the user state data is often used to match the description criterion. If the description criterion is the monitoring period duration of no answer of a user, the no answer state for a call of the user is used for matching. If the description criterion is the triggering time of a specific service, the current call time is used for matching.

In an embodiment of the present invention, a service supporting data server apparatus is further provided, configured to perform the function of assisting service trigger control according to the service supporting data. The apparatus includes a service supporting data obtaining module and a service supporting data assisted trigger control module.

The service supporting data obtaining module is configured to obtain the service supporting data.

The service supporting data assisted trigger control module is configured to assist service trigger control. In particular, the service supporting data assisted trigger control module sends the service supporting data to the service broker entity 208 to assist service trigger control, or when the service supporting data assisted trigger control module determines that the service supporting data is consistent with a trigger description criterion of activation associated service supporting data in service triggering criterion data, the service broker entity 208 is adapted to obtain the activated, available service triggering criterion data.

Furthermore, the service supporting data server apparatus includes a user subscription data obtaining module configured to obtain user subscription data.

In the embodiments of the present invention, key technologies such as registration and session routing after the introduction of the service broker entity 208, dialogue management and user management of the service broker entity 208, support for charging/intercepting function by the service broker entity 208, service interaction management between IMS application services and non-IMS application services invoked at the service broker entity 208, and the like can be implemented, so that the service broker entity 208 can be commercially deployed.

In summary, in the embodiments of the present invention, by performing service triggering via the service broker entity 208, the service broker entity 208 triggers a message to the service control entity 204 according to the user subscription data and/or user service supporting data of the user corresponding to the message after the service broker entity 208 receives the message from the session control entity 206 or the service control entity 204. Using the solutions in the embodiments of the present invention, key technologies such as registration and session routing after the introduction of the service broker entity 208, dialogue management and user management of the service broker entity 208, support for charging/intercepting function by the service broker entity 208, service interaction management between IMS application services and non-IMS application services invoked at the service broker entity 208, and the like can be implemented, so that the service broker entity 208 can be commercially deployed.

It is readily apparent that the skilled in the art that various modifications and variations may be made therein without departing from the scope of the invention. Therefore, if these modifications and variations to the present invention fall within the scope of claims and their equivalents of the present invention, the present invention is intended to cover these modifications and variations.

## Claims

1. A communication network system for providing a service broker function, comprising:
a user subscription data server coupled to a service broker entity, configured to save user subscription data;
a service control entity coupled to the service broker entity, configured to provide a service for the user;
a session control entity coupled to the service broker entity, configured to provide a session control and registration service; and
the service broker entity, having at least one of the following functions: controlling a current communication to be triggered to a specific service control entity, providing an interaction management capability for a plurality of services, providing a capability that combines a plurality of services into a new blended service, providing a dialogue management capability, providing a user management capability, providing an intercepting capability, providing a charging capability, and providing a management capability for Internet Protocol (IP) Multimedia System (IMS) application services and non-IMS application services.

2. The communication network system according to claim 1, further comprising:
a service supporting data server coupled to the service broker entity, configured to obtain various service supporting data for the user so as to assist service trigger control.

3. The communication network system according to claim 2, wherein the service supporting data server comprises:
a service supporting data obtaining module, configured to obtain the service supporting data; and
a service supporting data assisted trigger control module, configured to assist service trigger control according to the service supporting data.

4. The communication network system according to claim 3, wherein:
the service supporting data assisted trigger control module is configured to send the service supporting data to the service broker entity so as to assist service trigger control; or
the service supporting data assisted trigger control module is configured so that when determining that the service supporting data is consistent with a trigger description criterion of the service supporting data identifying the activation of the associated service triggering criterion data, the service broker entity obtains activated, available service triggering criterion data.

5. The communication network system according to claim 1, further comprising:
an offline/online charging system coupled to the service broker entity, configured to provide a charging information collection and/or online charging service.

6. The communication network system according to claim 1, wherein the service broker entity supports management of interactions between IMS application services and non-IMS application services.

7. A communication method for providing a service broker function, comprising:
performing, by a service broker entity that provides a service broker function, service triggering,
wherein upon receiving a message from a session control entity or a service control entity, the service broker entity triggers the message carrying user subscription data and/or user service supporting data to the service control entity according to the user subscription data and/or the user service supporting data of a user corresponding to the message via at least one of:
a Session Initiation Protocol (SIP) interface, an Intelligent Network Application Protocol interface, a Customized Applications for Mobile network Enhanced Logic (CAMEL) Application Part protocol interface, a Mobile Application Part protocol interface, an Open Service Access application programming interface, and an internal interface.

8. The communication method according to claim 7, wherein:
the service control entity comprises at least one of: an Internet Protocol (IP) Multimedia Subsystem (IMS) application server, an intelligent network Service Control Function entity, an Open Service Access application server, and a soft switch; and
the service broker entity supports interaction management for different types of services provided by different service control entities.

9. The communication method according to claim 8, wherein the service broker entity prohibits triggering another service control entity according to a service conflict prohibition criterion after a service provided by the service control entity has been invoked.

10. The communication method according to claim 7, wherein different types of services are triggered at the service broker entity using uniform service triggering criterion data.

11. The communication method according to claim 7, wherein the service broker entity matches the service supporting data with a trigger description criterion for service supporting data in the user subscription data so as to trigger the service control entity.

12. The communication method according to claim 11, wherein upon receiving a communication request message, the service broker entity requests a service supporting data server for the service supporting data, or, the service broker entity sends the received communication request message to the service supporting data server, which carries the service supporting data in a message in response to the request.

13. The communication method according to claim 11 or 12, wherein,
after obtaining the service supporting data, the service broker entity makes a match between the service supporting data and a trigger description criterion for the service supporting data to trigger the service control entity, or
after obtaining a trigger description criterion for the service supporting data, the service broker entity obtains the corresponding service supporting data and makes a match to trigger the service control entity.

14. The communication method according to claim 7, wherein when the service supporting data is consistent with a trigger description criterion of the activation associated service supporting data in service triggering criterion data, the service broker entity obtains activated, available service triggering criterion data and triggers the service control entity according to the service triggering criterion data.

15. The communication method according to claim 14, wherein the obtaining, by the service broker entity, the activated, available service triggering criterion data comprises:
receiving, by the service broker entity, the service triggering criterion data, or
activating the inactivated service triggering criterion data previously obtained at the service broker entity.

16. The communication method according to claim 7, wherein the session control entity routes the received message to the service broker entity by:
routing the received message to the service broker entity according to an initial filter criteria including a routing address of the service broker entity; or
routing the received message directly to the service broker entity.

17. The communication method according to claim 16, wherein in a direct routing, the session control entity obtains the routing address of the service broker entity according to presetting or from the message.

18. The communication method according to claim 16, wherein when the message is a registration message, message routing is performed in at least one of the following manners that:
the session control entity uses a third party registration and routes the registration message to the service broker entity according to the initial filter criteria including the routing address of the service broker entity;
the session control entity directly routes the registration message to the service broker entity after a user registration is successful; and
the session control entity directly routes the registration message to the service broker entity after the session control entity receives a user registration message.

19. The communication method according to claim 7, wherein the service broker entity obtains a routing address of the session control entity in at least one of the following manners that:
the service broker entity obtains the routing address of the session control entity from a message sent by the session control entity; and
the service broker entity queries the user subscription data server for the routing address of the session control entity.

20. The communication method according to claim 7, wherein the service broker entity is configured to process a subscription request for user registration state information in at least one of the following manners that:
the service broker entity receives a subscription request for user registration state information from a subscription requester; and
the service broker entity issues the subscription request for the user registration state information to the session control entity.

21. The communication method according to claim 7, wherein the service broker entity obtains subscribed user registration state information in at least one of the following manners that:
the service broker entity obtains the user registration state information from the session control entity; and
the service broker entity generates the user registration state information.

22. The communication method according to claim 7, wherein the service broker entity forks a message according to user routing information and sends the forked message to one or more user terminals via the session control entity.

23. The communication method according to claim 22, wherein the message sent to the session control entity carries a forking prohibition indicator.

24. The communication method according to claim 7, wherein the service broker entity forks a message according to user routing information and directly routes the forked message to one or more user terminals.

25. The communication method according to claim 7, wherein, if the SIP message received by the service broker entity does not comprise a charging system address, the service broker entity obtains the charging address from the user subscription data server and appends the charging address to the SIP message to be sent.

26. The communication method according to claim 7, wherein, if the SIP message received by the service broker entity does not comprise an IMS charging identifier, the service broker entity generates the charging identifier and appends the IMS charging identifier to the SIP message to be sent.

27. The communication method according to claim 7, wherein, in cases where the service broker entity needs to route a message to a network entity of another operator, the service broker entity generates an operator identifier and appends the operator identifier to message to be sent to the network entity of the another operator.

28. The communication method according to claim 7, wherein the service broker entity provides a blended service combined by a plurality of services, generates a blending application charging identifier corresponding to the blended service, and transfers the blending application charging identifier to the session control entity, and/or the service control entity, and/or an offline/online charging system.

29. The communication method according to claim 7, wherein IMS application services and non-IMS application services use uniform service triggering criterion data.

30. A service broker apparatus, comprising:
a trigger processing module, configured to provide a service triggering process and/or service interaction management function for Internet Protocol (IP) Multimedia System (IMS) application services and non-IMS application services according to user subscription data and/or service supporting data;
a call session management module, configured to provide a call session control function;
a user management module, configured to provide a user data management function; and
a protocol interface module, configured to provide an underlying protocol process interfacing with another entity.

31. The service broker apparatus according to claim 30, wherein,
the user management module is coupled to the protocol interface module, and is configured to communicate with a user subscription data server at least via an interface E1 to obtain user subscription data, and/or to communicate with a service supporting data server via an interface E2 to obtain user service supporting data;
the user management module is coupled to the trigger processing module, and is configured to provide at least one of user subscription data and user service supporting data;
the call session management module is coupled to the protocol interface module, and is configured at least to communicate with a session control entity to exchange messages via an interface E4, and to communicate with a service control entity to exchange messages via an interface E2;
the call session management module is coupled to the user management module, and is configured to exchange at least one of user state and user routing information; and
the call session management module is coupled to the trigger processing module, and is configured to at least transfer information from the interface E4 and/or from the interface E2 to the trigger processing module.

32. The service broker apparatus according to claim 30 or 31, wherein the call session management module at least comprises:
a registration management module, at least configured to provide a user registration processing and/or user registration state information subscription processing function; and
a call session control module, at least configured to provide a call session routing function.

33. The service broker apparatus according to claim 32, wherein the call session control module comprises at least one of:
an intelligent switch management module, configured to provide a process control function for an intelligent service protocol and to maintain a processing state of an intelligent service;
an Open Service Access (OSA) service capability management module, configured to provide an OSA service capability server processing function and to maintain a processing state of an OSA service; and
a call forking management module, configured to fork and route a message according to user routing information.

34. The service broker apparatus according to claim 30 or 31, further comprising:
a management supporting module, configured to provide a supporting function for service operating management.

35. The service broker apparatus according to claim 34, wherein the management supporting module at least comprises:
a charging module, configured at least to collect charging information, to send a message carrying a charging address and a charging identifier to the session control entity and/or the service control entity coupled to the service broker, and/or to send a charging event to the offline/online charging system, and/or to perform an online charging function under the control of the online charging system.

36. The service broker apparatus according to claim 35, wherein the charging module comprises a blended charging module configured to provide a blended service charging function.

37. The service broker apparatus according to claim 30 or 31, wherein the trigger processing module comprises at least one of:
a service triggering module, configured to trigger a service to a service control entity at least according to user subscription data and/or service supporting data; and
a service interaction module, configured to provide a service conflict management at least according to a service conflict prohibition criterion.
